# EUROPEAN PATENT SPECIFICATION

(11) **EP 4 054 387 B1**
(45) Date of publication and mention of the grant of the patent: **24.05.2023**
(21) Application number: 20830010.3
(22) Date of filing: 04.11.2020
(51) Int. Cl.: A47J 31/18

(54) **A BREWING CHAMBER AND A MACHINE SUITABLE TO BE USED WITH THE SAID BREWING CHAMBER**
BRÜHKAMMER UND ZUR VERWENDUNG DAMIT GEEIGNETE MASCHINE
CHAMBRE D'INFUSION ET MACHINE APPROPRIÉE POUR ÊTRE UTILISÉE AVEC LADITE CHAMBRE D'INFUSION

(30) Priority: 05.11.2019 TR 201917132
(43) Date of publication of application: 14.09.2022
(73) Proprietor: Arzum Elektrikli Ev Aletleri San. Ve Tic. A.S., 34050 Istanbul (TR)
(72) Inventor: ATILLA, Ersoy, 34050 Eyüp/ stanbul (TR); YÖRÜK, Hasan, 34050 Eyüp/ stanbul (TR); DILMAN, Berke, 34050 Eyüp/ stanbul (TR)
(86) International application number: PCT/TR2020/051045
(87) International publication number: WO 2021/091517

(56) References cited:
- WO-A1-2008/144805
- WO-A1-2011/054522
- WO-A2-2011/002421
- DE-A1-102010 039 071

## Description

### Technical Field

The present invention relates to a brewing chamber suitable for preparing especially hot beverages, and a machine suitable to be used with such a brewing chamber.

### Background of the Invention

Food products and hot beverages, especially coffee, could be prepared by machines having a brewing chamber. The brewing chambers generally comprise a heater, and this heater is connected, via a connector, to another connector located on the machine. Additionally, sensors for sensing temperature, and stirrers for stirring the ingredients inside the chamber might also be present on the brewing chambers. The electrical connections of the said components with the main machine is provided by the said connector.

In the present range of products, there are coffee machines having more than one cooking chambers. However, since the different components such as the heaters and temperature sensors as disclosed above might have different tolerance values, different brewing chambers might have different characteristic curves. As a result of this, for example, when a brewing chamber measures the temperature of the materials inside it as 90 °C, another brewing chamber might measure the same temperature as 95 °C. Hence, a machine where the different brewing chambers are calibrated is needed.

The European Patent document numbered EP2619511 in the background of the invention discloses a system for sensitively controlling the temperature in consumer products. The said system might calibrate the temperature sensor by using a known temperature value such as the boiling point of water.

Document WO 2011/054522 A1 discloses a brewing chamber having an identifier, comprising a chamber connector for enabling electrical connections of a component such as a heater and/or temperature sensor, the chamber connector having a terminal and a data pin, and a resistor, one pin of which is connected to the terminal of the chamber connector, and the other pin of which is connected to the data pin of the chamber connector. Document WO 2011/054522 A1 further discloses a machine suitable for recognizing said brewing chamber, comprising a machine connector reciprocating the chamber connector when the brewing chamber is placed so as to perform the brewing process, the machine connector having a terminal counterpart and a sensing pin, and a resistor, one pin of which is connected to the sensing pin of the chamber connector, and the other pin of which is connected to phase, neutral, ground or supply line of a power source.

In the state of the art, no brewing chambers having different identifiers, and no machine suitable for recognizing said chambers could be encountered. However, such a brewing chamber, and a machine suitable to be used with such a brewing chamber are needed.

### Brief Description of the Invention

An object of the invention is to provide a brewing chamber having at least one identifier, and a machine suitable to recognize such a chamber.

### Detailed Description of the Invention

The brewing chamber and the machine in order to fulfill the objects of the present invention is illustrated in the attached figures, where:

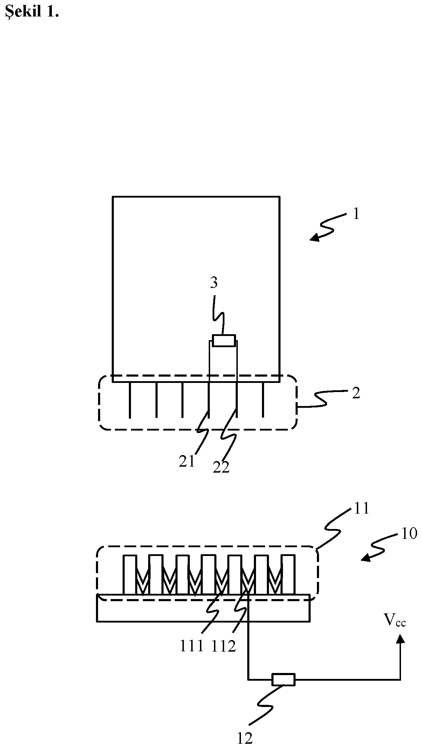

- **Figure 1.**: Schematic view of the inventive brewing chamber and machine.
- **Figure 2.**: Electrically equivalent illustration of the embodiments where the first resistor is selected as zero (A) and infinite (B)
- **Figure 3.**: Schematic illustration of the embodiment where the mains lines are used

Elements shown in the figures are individually numbered, and the correspondence of these numbers are given as follows:
- **1.**: Brewing chamber
- **2.**: Chamber connector
- **21.**: Terminal
- **22.**: Data pin
- **3.**: First resistor
- **10.**: Machine
- **11.**: Machine connector
- **111.**: Terminal counterpart
- **112.**: Sensing pin
- **12.**: Second resistor

A brewing chamber (1) having at least one identifier essentially comprises;
- at least one chamber connector (2) for enabling electrical connections of at least one component such as a heater and/or temperature sensor, having at least one terminal (21) and at least one data pin (22),
- at least one first resistor (3), one pin of which is connected to the terminal (21) of the chamber connector (2), and the other pin of which is connected to the data pin (22) of the chamber connector (2), directly and/or via other components.

At least one chamber connector (2) for enabling electrical connections of at least one component such as a heater and/or temperature sensor. Said chamber connector (2) comprises at least one terminal (21) and at least one data pin (22). Said terminal (21) might be connected to phase, neutral or ground lines of the mains supply. The terminal (21) might additionally be connected to a ground or supply line of another circuit. Said chamber connector (2) might comprise separate pins for connecting to the phase, neutral and/or ground lines of the mains supply.

At least one first resistor (3), one pin of which is electrically connected to the terminal (21) of the chamber connector (2), and the other pin of which is electrically connected to the data pin (22) of the chamber connector (2).

First resistor (3) might be any component having a resistance ohmic value between zero and infinite. In other words, the said first resistor (3) also defines the situations where the electrical connection between the terminal (21) and the data pin (22) is provided by a conductive wire or the connection between the terminal (21) and the data pin (22) is an open circuit.

The first resistor (3) might be a variable resistor such as a potentiometer or a trimmer resistor. In this embodiment, the first resistor (3) might be located so as to be reached and manipulated by the user. Said location might be a handle of the brewing chamber (1), however it is not limited to it.

The brewing chamber (1) might comprise a multi-position switch such as a commutator or a rotary switch, and multiple first resistors (3) connected to the different positions of the said switch.

The machine (10) suitable for recognizing the brewing chamber (10) having at least one identifier essentially comprises;
- at least one machine connector (11) reciprocating the chamber connector (2) when the brewing chamber (1) is placed so as to perform the brewing process, having at least one terminal counterpart (111) and at least one sensing pin (112),
- at least one second resistor (12), one pin of which is connected to the sensing pin (112) of the chamber connector (11), and the other pin of which is connected to phase, neutral, ground or supply line of a power source.

At least one machine connector (11) reciprocating the chamber connector (2) when the brewing chamber (1) is placed so as to perform the brewing process. Said machine connector (11) comprises at least one terminal counterpart (21) suitable for being connected to the terminal (21) of the chamber connector (2), and at least one sensing pin (22) suitable for being connected to the data pin (22) of the chamber connector (2).

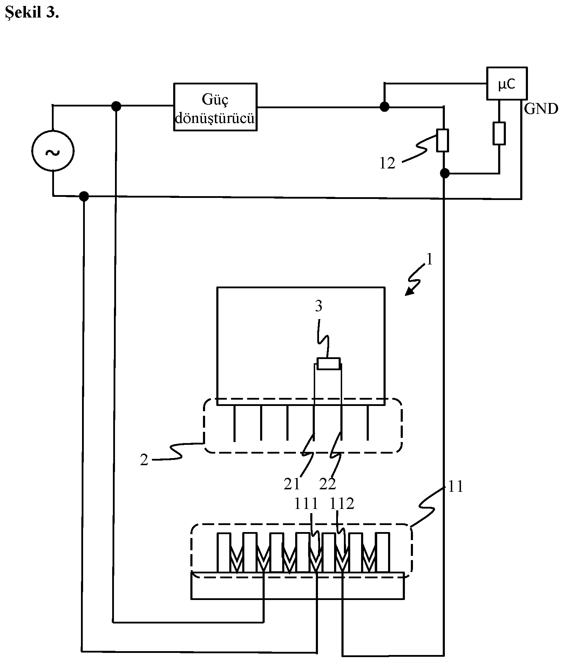

The inventive machine (10) comprises at least one second resistor (12), one pin of which is connected to the sensing pin (112) of the machine connector (11), and the other pin of which is connected to phase, neutral, ground or supply line of the mains line or a separate power source enabling the rectification and/or limiting of the voltage (An example of this embodiment is given in Fig. 3. However, the invention cannot be limited by this example). The second resistor (12) serves the purpose of a pull-up or a pull-down resistor. By this way, in the embodiment where the first resistor (3) is selected as infinite, the data pin (22) is prevented from floating, and in the embodiment where the first resistor (3) is selected as zero, the power supply is prevented from shorting. In the other values of the first resistor (3), the first resistor (3) and the second resistor (12) form a voltage divider together.

The sensing pin (112) of the inventive machine (10) is electrically connected to one of the digital and/or analogue inputs of a control unit. By this, the said control unit might obtain information about the presence, non-existence, and/or the value of the first resistor (3). A separate resistor might also be present between the sensing pin (112) and the said digital and/or analogue input.

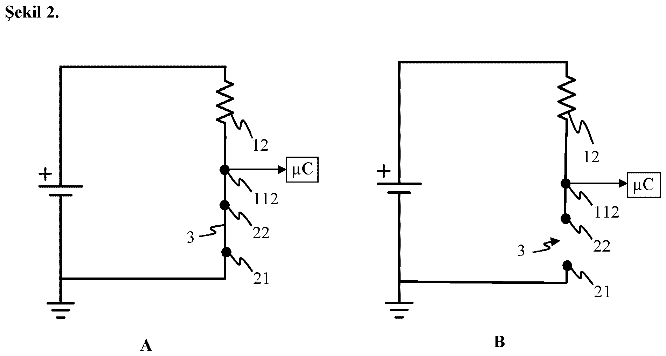

In an exemplary embodiment of the invention, it might be considered that one brewing chamber (1) wherein a conductive wire is used as the first resistor (3) and the terminal (21) is connected to the ground line (for convenience, this brewing chamber will be named as first brewing chamber), and another brewing chamber (1) wherein the connection between the terminal (21) and the data pin (22) is left as open circuit as the first resistor (3) (for convenience, this brewing chamber will be named as second brewing chamber), are used. In the case where the terminals (21) of the brewing chambers (1) are connected to the ground line of a power supply, and the pin of the second resistor (12) on the machine (10) that is not connected to the sensing pin (112) is connected to the positive (+) line of the power supply, when the first brewing chamber (1) is placed on the machine (10) the control unit reads zero or approximately zero voltage value. When the second brewing chamber (1) is placed on the machine (10), the control units reads the voltage value of the power supply to which the pin of the second resistor (12) that is not connected to the sensing pin (112) is connected. By this, the machine (10) could recognize two different brewing chambers. The equivalents of the said brewing chambers (1) and the machine (10) are given in Figures 2A and 2B.

In another exemplary embodiment of the invention, it might be assumed that n number of brewing chambers (1), each of which have first resistors (3) of different values from each other. In this embodiment, when a brewing chamber (1) is placed on the machine (10), the control unit reads a different value for each brewing chamber (1), depending on the values of the first resistor (3) and the second resistor (12). In this embodiment, the sensing pin (112) is connected to an analogue input of the control unit. The number of the recognizable brewing chambers (1) depend on the resolution of an analogue to digital converter (ADC) connected to the said analogue input.

In another exemplary embodiment of the invention, it might be considered that one brewing chamber (1) wherein a variable resistor having a maximum value less than the value of the second resistor (12) is used as the first resistor (3) (for convenience, this brewing chamber will be named as first brewing chamber), and another brewing chamber (1) wherein a variable resistor having a minimum value greater than the value of the second resistor (12) is used as the first resistor (3) (for convenience, this brewing chamber will be named as second brewing chamber), are used. The variable resistor, as explained above, might be formed by a potentiometer, trimmer resistor and/or a multi-position switch and multiple first resistors (1) connected to different positions of the said switch. In this embodiment, if it is assumed that a total of 5V is dropped across the first resistor (3) and the second resistor (12); when the first brewing chamber (1) is placed on the machine (10), data between 0V-2,5V would be obtained from the sensing pin (112), and when the second brewing chamber (1) is placed on the machine, data between 2,5V-5V would be obtained from the sensing pin (112). The control unit recognizes that the first brewing chamber (1) is placed when the said data is below 2,5V, and that the second brewing chamber (1) is placed when the said data is above 2,5V. By this way it is enabled both that the control unit recognizes the brewing chambers (1), and that the user is able to perform adjustments on the brewing chambers (1). The said voltage ranges are merely examples and by selecting appropriate resistor values, the said voltage ranges might be limited to the desired voltage ranges. For example, the minimum and maximum values of the first resistors (3) of the brewing chambers might be selected such that the output of the said voltage divider changes between 0V-1V, 1V-2V, 2V-3V, 3V-4V, 4V-5V. In this example, five different brewing chambers (1) might be recognized. In this example, a constant resistor and a variable resistor serially connected to the said constant resistor might be used as the first resistor (3), however the resistor combinations formable are not limited to this.

In an embodiment of the invention, usable with the other embodiments, the machine (10) is suitable to be used with more than one brewing chambers (1) at the same time.

In an embodiment of the invention, usable with the other embodiments, the machine (10) recognizes the brewing chamber (1) through the data it receives from the brewing chamber, and provides a visual and/or auditory feedback to the user about the type of the said brewing chamber (1). Said feedback might be provided via any method, such as changing a display, activating a sound generator and/or providing a mobile phone notification, however it is not limited to these examples. For example, when the user makes adjustments on the brewing chamber (1) for preparing coffee with sugar, the machine (10) might turn an LED on, indicating that coffee with sugar is being prepared, it might show the indication "Coffee with Sugar" on a display, it might emit a sound from a speaker indicating that coffee with sugar is being prepared and/or it might send a notification to a device such as a cell phone or a tablet. Said feedbacks are controlled by the control unit.

The machine (10) stores calibration values related to more than one brewing chambers (1) in a memory unit. A liquid having a previously known boiling point, such as water, is poured in a brewing chamber (1). When the calibration process starts, the control unit drives a heater such that it heats the liquid inside the brewing chamber (1). Once the temperature of the liquid stops rising, it is understood that the boiling point of the said liquid has been reached. The data received from a temperature sensor at the boiling point of the said liquid is stored in the memory unit as the boiling point data of the said liquid, in other words, the calibration data, together with the data received from the sensing pin (112). The data received from the temperature sensor might be the output voltage of a voltage divider formed using the said temperature, however it is not limited to that. When an already calibrated brewing chamber (1) is placed on one of the machine connectors (11), the control unit receives from the sensing pin (112) data relating to the said brewing chamber (1), and afterwards, it receives the calibration data from the memory unit, corresponding to this data. By this, the control unit knows which value it should read from the temperature sensor at the boiling point of the liquid inside the said brewing chamber (1), and it might drive a heater until the materials inside the brewing chamber (1) reach this temperature. By this, for example in a machine (10) where two brewing chambers (1) might be used at the same time, no matter which brewing chamber (1) is placed on which machine connector (12), the boiling point of the liquid inside the brewing chambers (1) are known.

In an embodiment of the invention, usable with the other embodiments, data regarding the heating regime is also present in the memory unit. By this way, brewing chambers (1) usable for preparing different type of beverages might be driven, by the control unit, in different manners. For example, brewing chambers (1) used for boiling milk, Turkish coffee with sugar and/or plain Turkish coffee might be heated in different manners. Said heating regime data might be data indicating at which power should the heater be run, and for how long, however it is not limited to that.

## Claims

1. A machine (10) suitable for recognizing a brewing chamber (1), said brewing
chamber (1) having at least one identifier comprising:
- at least one chamber connector (2) for enabling electrical connections of a temperature sensor,
- the chamber connector (2) enabling electrical connections of a temperature sensor having at least one terminal (21) and at least one data pin (22), and
- at least one first resistor (3), one pin of which is connected to the terminal (21) of the chamber connector (2), and the other pin of which is connected to the data pin (22) of the chamber connector (2), directly and/or via other components,
- wherein the first resistor (3) is a variable resistor, or a multi-position switch and multiple first resistors (3) are connected to different positions of said switch,
wherein the machine (10) comprises:
- at least one machine connector (11) reciprocating the chamber connector (2) when the brewing chamber (1) is placed so as to perform the brewing process,
- the machine connector (11) having at least one terminal counterpart (111) and at least one sensing pin (112), and
- at least one second resistor (12), one pin of which is connected to the sensing pin (112) of the chamber connector (11), and the other pin of which is connected to phase, neutral, ground or supply line of a power source,
- a control unit having at least one digital and/or analogue input, wherein at least one of the said inputs is electrically connected to the sensing pin (112),
- at least one temperature sensor for measuring the temperature of the materials, or a value representing it, in at least one brewing chamber (1), and at least one memory unit for holding the calibration data related to at least one brewing chamber (1),
- wherein the control unit is adapted to run a calibration process as follows:
∘ when the calibration process starts, the control unit drives a heater such that it heats the liquid inside the brewing chamber (1),
∘ the data received from the temperature sensor at the boiling point of said liquid is stored in the memory unit as the calibration data, together with the data received from the sensing pin (112),
∘ when an already calibrated brewing chamber (1) is placed on one of the machine connectors (11), the control unit receives from the sensing pin (112) data relating to said brewing chamber (1), and afterwards, it receives the calibration data from the memory unit, corresponding to this data.

2. A machine (10) as in Claim 1 wherein the machine (10) is suitable to be used with more than one brewing chambers (1) at the same time.

3. A machine (10) as in Claim 1, **characterized by** the memory unit suitable for holding the heating regime data related to at least one brewing chamber (1).

4. A machine (10) as in Claim 3, **characterized in that**, the control unit is adapted to receive the heating regime data corresponding to the brewing chamber (1) from the memory unit, when the brewing chamber is placed on a machine connector (11), and adapted to drive a heater according to the said heating regime.

5. A machine (10) as in Claim 1, **characterized in that** the control unit is adapted to recognize the brewing chamber (1) through the data it receives from the brewing chamber (1), and adapted to provide a visual and/or auditory feedback to the user about the type of the said brewing chamber (1).

6. A brewing chamber (1) suitable to be recognized by the machine (1) according to Claims 1-5,
said brewing chamber (1) having at least one identifier comprising:
- at least one chamber connector (2) for enabling electrical connections of a temperature sensor,
- the chamber connector (2) enabling electrical connections of a temperature sensor having at least one terminal (21) and at least one data pin (22), and
- at least one first resistor (3), one pin of which is connected to the terminal (21) of the chamber connector (2), and the other pin of which is connected to the data pin (22) of the chamber connector (2), directly and/or via other components,
- wherein the first resistor (3) is a variable resistor, or a multi-position switch and multiple first resistors (3) connected to different positions of the said switch.

7. A brewing chamber (1) as in Claim 6, **characterized by** the first resistor (3) located such that it can be reached and manipulated by the user.

8. A brewing chamber (1) as in Claim 7, **characterized by** the multi-position switch located such that it can be reached and manipulated by the user.

## Patentansprüche

1. Maschine (10), die zum Erkennen einer Brühkammer (1) geeignet ist, wobei die Brühkammer (1) mindestens eine Kennung aufweist, umfassend:
- wenigstens einen Kammerverbinder (2) zum Ermöglichen elektrischer Anschlüsse eines Temperatursensors,
- wobei der Kammerverbinder (2) elektrische Verbindungen eines Temperatursensors mit mindestens einem Anschluss (21) und mindestens einem Datenstift (22) ermöglicht, und
- mindestens einen ersten Widerstand (3), dessen einer Pin mit dem Anschluss (21) des Kammerverbinders (2) und dessen anderer Pin direkt und/oder über andere Bauteile mit dem Datenpin (22) des Kammerverbinders (2) verbunden ist,
- wobei der erste Widerstand (3) ein variabler Widerstand ist oder ein Mehrstellungsschalter und mehrere erste Widerstände (3) mit verschiedenen Positionen des Schalters verbunden sind,
wobei die Maschine (10) umfasst:
- mindestens einen Maschinenanschluss (11), der den Kammeranschluss (2) hin- und herbewegt, wenn die Brühkammer (1) so platziert ist, dass der Brühvorgang durchgeführt wird,
- wobei der Maschinenverbinder (11) wenigstens ein Anschlussgegenstück (111) und wenigstens einen Messstift (112) aufweist, und
- mindestens einen zweiten Widerstand (12), von dem ein Stift mit dem Messstift (112) des Kammerverbinders (11) verbunden ist und der andere Stift mit der Phasen-, Neutral-, Masse- oder Versorgungsleitung einer Stromquelle verbunden ist,
- eine Steuereinheit mit mindestens einem digitalen und/oder analogen Eingang, wobei mindestens einer der Eingänge elektrisch mit dem Erfassungsstift (112) verbunden ist,
- mindestens einen Temperatursensor zur Messung der Temperatur der Materialien oder eines diese repräsentierenden Wertes in mindestens einer Brühkammer (1) und mindestens eine Speichereinheit zur Aufnahme der Kalibrierdaten mindestens einer Brühkammer (1),
- wobei die Steuereinheit dazu angepasst ist, einen Kalibrierungsprozess wie folgt auszuführen:
∘ wenn der Kalibriervorgang beginnt, die Steuereinheit eine Heizung so ansteuert, dass sie die Flüssigkeit innerhalb der Brühkammer (1) erwärmt,
∘ die von dem Temperatursensor bei dem Siedepunkt der Flüssigkeit empfangenen Daten in der Speichereinheit als die Kalibrierungsdaten zusammen mit den von dem Messstift (112) empfangenen Daten gespeichert werden,
∘ wenn eine bereits kalibrierte Brühkammer (1) auf einen der Maschinenanschlüsse (11) aufgesetzt wird, empfängt die Steuereinheit von dem Taststift (112) Daten, die sich auf die Brühkammer (1) beziehen, und danach empfängt sie die Kalibrierungsdaten von der Speichereinheit, die diesen Daten entsprechen.

2. Maschine (10) nach Anspruch 1, wobei die Maschine (10) geeignet ist, mit mehr als einer Brühkammer (1) gleichzeitig verwendet zu werden.

3. Maschine (10) nach Anspruch 1, **dadurch gekennzeichnet, dass** die Speichereinheit geeignet ist, die Heizregime-Daten zu halten, die sich auf mindestens eine Brühkammer (1) beziehen.

4. Maschine (10) nach Anspruch 3, **dadurch gekennzeichnet, dass** die Steuereinheit angepasst ist, um die Heizregime-Daten, die der Brühkammer (1) entsprechen, von der Speichereinheit zu empfangen, wenn die Brühkammer auf einem Maschinenverbinder (11) platziert ist, und angepasst ist, um eine Heizeinrichtung gemäß dem Heizregime anzutreiben.

5. Maschine (10) nach Anspruch 1, **dadurch gekennzeichnet, dass** die Steuereinheit so eingerichtet ist, dass sie die Brühkammer (1) anhand der Daten erkennt, die sie von der Brühkammer (1) empfängt, und so eingerichtet ist, dass sie dem Benutzer eine visuelle und/oder akustische Rückmeldung über den Typ der Brühkammer (1) liefert.

6. Brühkammer (1), die geeignet ist, von der Maschine (1) nach den Ansprüchen 1-5 erkannt zu werden,
wobei die Brühkammer (1) mindestens eine Kennung aufweist, umfassend:
- wenigstens einen Kammerverbinder (2) zum Ermöglichen elektrischer Anschlüsse eines Temperatursensors,
- wobei der Kammerverbinder (2) elektrische Verbindungen eines Temperatursensors mit mindestens einem Anschluss (21) und mindestens einem Datenstift (22) ermöglicht, und
- mindestens einen ersten Widerstand (3), dessen einer Pin mit dem Anschluss (21) des Kammerverbinders (2) und dessen anderer Pin direkt und/oder über andere Bauteile mit dem Datenpin (22) des Kammerverbinders (2) verbunden ist,
- wobei der erste Widerstand (3) ein variabler Widerstand ist oder ein Mehrstellungsschalter und mehrere erste Widerstände (3) mit verschiedenen Positionen des Schalters verbunden sind,

7. Brühkammer (1) nach Anspruch 6, **dadurch gekennzeichnet, dass** der erste Widerstand (3) vom Benutzer erreichbar und manipulierbar angeordnet ist.

8. Brühkammer (1) nach Anspruch 7, **dadurch gekennzeichnet, dass** der Mehrstellungsschalter vom Benutzer erreichbar und betätigbar angeordnet ist.

## Revendications

1. Machine (10) appropriée pour reconnaître une chambre d'infusion (1), ladite chambre d'infusion (1) ayant au moins un identificateur comprenant :
- au moins un connecteur de chambre (2) pour permettre des connexions électriques d'un capteur de température,
- le connecteur de chambre (2) permettant les connexions électriques d'un capteur de température ayant au moins une borne (21) et au moins une broche de données (22), et
- au moins une première résistance (3) dont une broche est reliée à la borne (21) du connecteur de chambre (2), et dont l'autre broche est reliée à la broche de données (22) du connecteur de chambre (2), directement et/ou par l'intermédiaire d'autres composants,
- dans lequel la première résistance (3) est une résistance variable, ou un commutateur à positions multiples et de multiples premières résistances (3) sont connectées à des positions différentes ou ledit commutateur,
dans lequel la machine (10) comprend :
- au moins un connecteur de machine (11) effectuant un mouvement de va-et-vient du connecteur de chambre (2) lorsque la chambre d'infusion (1) est placée de manière à effectuer le processus d'infusion,
- le connecteur de machine (11) ayant au moins une contrepartie de borne (111) et au moins une broche de détection (112), et
- au moins une seconde résistance (12), dont une broche est connectée à la broche de détection (112) du connecteur de chambre (11), et dont l'autre broche est connectée à une ligne de phase, de neutre, de masse ou d'alimentation d'une source d'alimentation,
- une unité de commande ayant au moins une entrée numérique et/ou analogique, dans laquelle au moins une desdites entrées est connectée électriquement à la broche de détection (112),
- au moins un capteur de température pour mesurer la température des matériaux, ou une valeur la représentant, dans au moins une chambre d'infusion (1), et au moins une unité de mémoire pour conserver les données d'étalonnage relatives à au moins une chambre d'infusion (1),
- dans lequel l'unité de commande est adaptée pour exécuter un processus d'étalonnage de la manière suivante :
∘ lorsque le processus d'étalonnage démarre, l'unité de commande entraîne un dispositif de chauffage de telle sorte qu'il chauffe le liquide à l'intérieur de la chambre d'infusion (1),
∘ les données reçues du capteur de température au point d'ébullition dudit liquide sont stockées dans l'unité de mémoire en tant que données d'étalonnage, conjointement avec les données reçues de la broche de détection (112),
∘ lorsqu'une chambre d'infusion (1) déjà calibrée est placée sur l'un des connecteurs de machine (11), l'unité de commande reçoit de la broche de détection (112) des données relatives à ladite chambre d'infusion (1), et reçoit ensuite les données de calibrage de l'unité de mémoire, correspondant à ces données.

2. Machine (10) selon la revendication 1, dans laquelle la machine (10) est appropriée pour être utilisée avec plus d'une chambre d'infusion (1) en même temps.

3. Machine (10) selon la revendication 1, **caractérisée en ce que** l'unité de mémoire est appropriée pour contenir les données de régime de chauffage relatives à au moins une chambre d'infusion (1).

4. Machine (10) selon la revendication 3, **caractérisée en ce que** l'unité de commande est adaptée pour recevoir les données de régime de chauffage correspondant à la chambre d'infusion (1) à partir de l'unité de mémoire, lorsque la chambre d'infusion est placée sur un connecteur de machine (11), et adaptée pour entraîner un dispositif de chauffage selon ledit régime de chauffage.

5. Machine (10) selon la revendication 1, **caractérisée en ce que** l'unité de commande est adaptée pour reconnaître la chambre d'infusion (1) à travers les données qu'elle reçoit de la chambre d'infusion (1), et adaptée pour fournir une rétroaction visuelle et/ou auditive à l'utilisateur sur le type de ladite chambre d'infusion (1).

6. Chambre d'infusion (1) appropriée pour être reconnue par la machine (1) selon les revendications 1 à 5,
ladite chambre d'infusion (1) ayant au moins un identifiant comprenant :
- au moins un connecteur de chambre (2) pour permettre des connexions électriques d'un capteur de température,
- le connecteur de chambre (2) permettant les connexions électriques d'un capteur de température ayant au moins une borne (21) et au moins une broche de données (22), et
- au moins une première résistance (3) dont une broche est reliée à la borne (21) du connecteur de chambre (2), et dont l'autre broche est reliée à la broche de données (22) du connecteur de chambre (2), directement et/ou par l'intermédiaire d'autres composants,
- dans lequel la première résistance (3) est une résistance variable, ou un commutateur à positions multiples et de multiples premières résistances (3) sont connectées à des positions différentes ou ledit commutateur,

7. Chambre d'infusion (1) selon la revendication 6, **caractérisée en ce que** la première résistance (3) est disposée de manière à pouvoir être atteinte et manipulée par l'utilisateur.

8. Chambre d'infusion (1) selon la revendication 7, **caractérisée en ce que** le commutateur à positions multiples est disposé de manière à pouvoir être atteint et manoeuvré par l'utilisateur.
